# EUROPEAN PATENT APPLICATION

(11) **EP 1 495 846 A1**
(43) Date of publication of application: **12.01.2005**
(21) Application number: 04386016.2
(22) Date of filing: 27.05.2004
(51) Int. Cl.: B28C 5/18

(54) **Method of manufacturing of jagged wheels for concrete machines**

(30) Priority: 10.07.2003 GR 2003100305
(71) Applicant: Aggelos, Averis, 55131 Kalamaria, Thessaloniki (GR)
(72) Inventor: Aggelos, Averis, 55131 Kalamaria, Thessaloniki (GR)

(57) **Abstract**

It is a method applied on the manufacturing of jagged wheels with sheet iron (hoop) which has a jagged form (wave form) after its passing through the appropriate cylinders.

## Description

This invention refers to the construction of jagged wheels with the application of a method resulting to the jagging of sheet iron as band (hoop) after its passing through the appropriate cylinders.

Till nowadays, it is known that when we would like to manufacture big jagged wheels, procedures are used which require the construction of moulds in foundries, where at the manufactured wheels damages are caused, which destroy these products.

Besides the production cost influences their price (e.x. the jagged ring of concrete machine).

In opposite, with my method we could form an iron sheet in a jagged way and adapt it in an edgy shape, where we proceed to the welding of iron sheet. Thus, we have a jagged ring in a more economic price and more resistant because of the better quality of iron. Another alternative is the manufacturing of long serial sheets (straight jagging) and smaller gears, where a metallic plate is required for the peripheral installation of the formed jagging.

Instead of plate we could use sheet iron.

A practical application is presented at the attached figures, where:

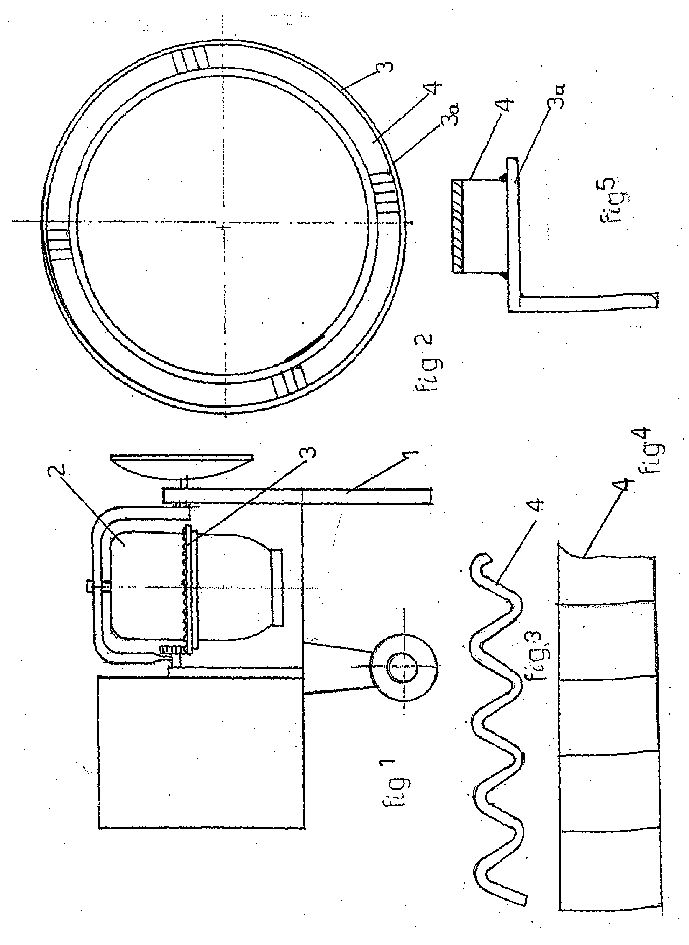

In figure 1 the side of a concrete machine is noted.
In figure 2 we see the top view of jagged ring (wheel) of concrete machine.
In figure 3 the form of jagging in an iron sheet is observed.
In figure 4 the top view of the jagged form is presented.

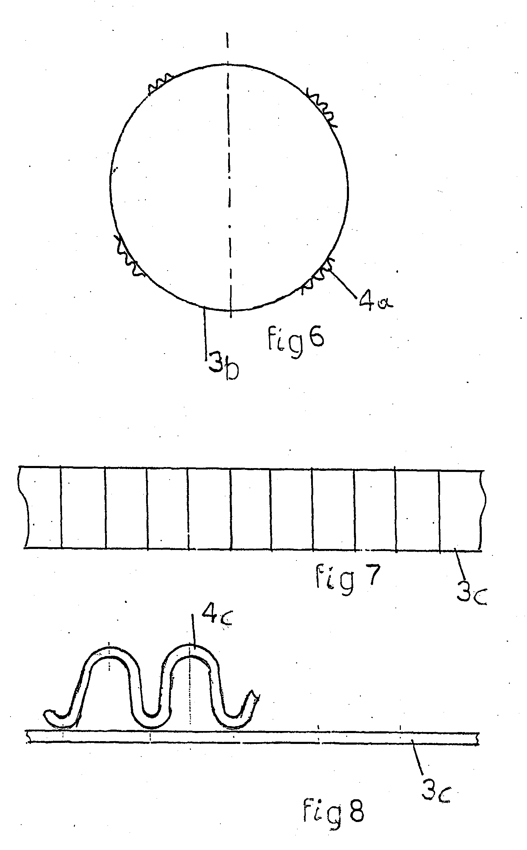

In figure 5 we see the cutting of jagged ring.
In figure 6 the frontage of an jagged ring is noted.
In figure 7 the top view of a long serial sheet (straight jagging) is shown.
In figure 8 we see the frontage of a long serial sheet.

Referred to the figures the method is applied according the following data:

Concerning the figures the formed jagging is referred to an iron sheet (4), the ring (3) from iron - edge- (3a) for its application on the tank (2) of concrete machine (1). Concerning its application on jagged wheels, the jagging (4a) is adapted in an iron sheet or edge (3b) even in a rod (3c) in a straight jagging (4c).

## Claims

1. A manufacturing method of jagged wheels applied according the following data: an iron sheet (4), the ring (3) from iron -edge- (3a) for its application on the tank (2) of concrete machine (1). Concerning its application on jagged wheels, the jagging (4a) is adapted in an iron sheet or edge (3b) even in a rod (3c) in a straight jagging (4c). This method is unique because at its application stage, its jagging is formed by the appropriate cylinders giving it its jagged feature.
